# EUROPÄISCHE PATENTSCHRIFT

(11) **EP 3 496 379 B1**
(45) Veröffentlichungstag und Bekanntmachung des Hinweises auf die Patenterteilung: **02.12.2020**
(21) Anmeldenummer: 19153489.0
(22) Anmeldetag: 11.02.2008
(51) Int. Cl.: H04N 1/04, G01N 21/89, G01N 21/898, G06T 7/00, H04N 5/225

(54) **VORRICHTUNG ZUM ERFASSEN EINES BILDES IN EINER BILDEBENE, DIE SICH AUF EINER MATERIALBAHN BEFINDET**
DEVICE FOR CAPTURING AN IMAGE IN AN IMAGE PLANE LOCATED ON A CONVEYOR BAND
DISPOSITIF D'ENREGISTREMENT D'UNE IMAGE DANS UN PLAN D'IMAGE SITUÉ SUR UNE BANDE DE MATÉRIAU

(43) Veröffentlichungstag der Anmeldung: 12.06.2019
(62) Teilanmeldung aus: 08151277.4
(73) Patentinhaber: Texmag GmbH Vertriebsgesellschaft, 8800 Thalwil (CH)
(72) Erfinder: Eisen, Jürgen, 86199 Augsburg (DE)
(74) Vertreter: Peterreins Schley

(56) Entgegenhaltungen:
- EP-A- 0 863 656
- US-A- 5 142 357
- US-A1- 2002 054 217
- US-A1- 2004 008 773
- US-A1- 2006 077 255
- US-A1- 2006 147 092
- US-A1- 2006 175 549
- US-B1- 6 396 561

## Beschreibung

### Technisches Gebiet

Dieses Dokument bezieht sich auf Vorrichtungen zum Erfassen eines Bildes und Verfahren zum Auswerten von Bilddaten.

### Hintergrund

Vorrichtungen zum Erfassen eines Bildes und Verfahren zum Auswerten von Bilddaten können beispielsweise Anwendung finden in Anlagen zur Herstellung von Materialbahnen, wie beispielsweise bedruckte Papierbahnen, Folienbahnen oder Textilbahnen.

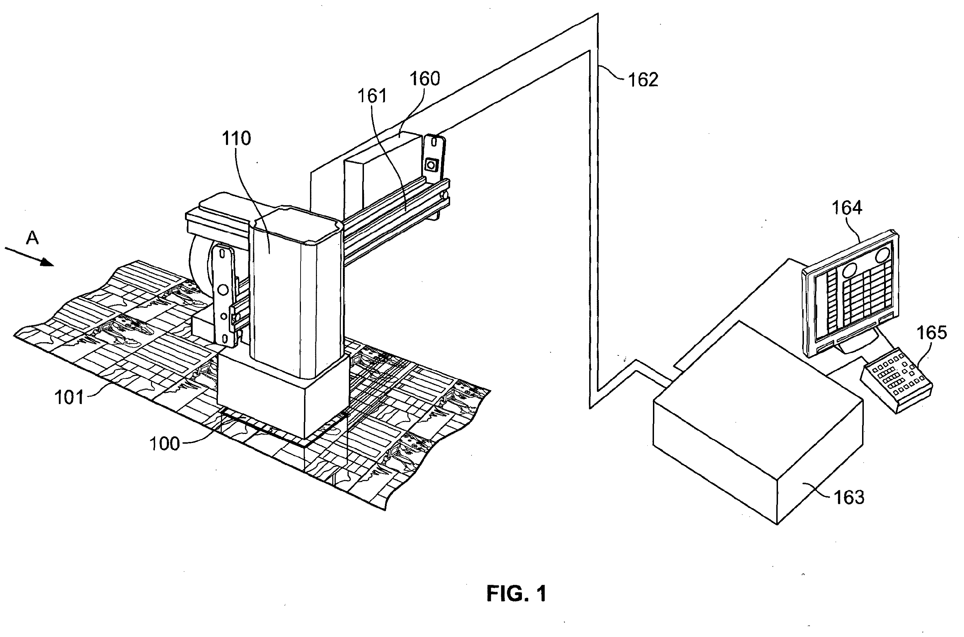

Wie in FIG. 1 gezeigt, kann ein Erfassungsmittel 110 ein Bild 100 auf einer bedruckten Materialbahn 101 erfassen. Das Erfassen des Bildes erfolgt zu einem Abtastzeitpunkt. Es können Bilder nacheinander zu verschiedenen Abtastzeitpunkten erfasst werden, beispielsweise quer zur Materialbahnrichtung A während einer Querbewegung über ein mit einem Motor 160 betriebenes Schienensystem 161. Die Abtastung kann in Materialbahnrichtung A erfolgen, beispielsweise dadurch, dass die Materialbahn 101 in Materialbahnrichtung A bewegt wird. Die Bilddaten können über eine Leitung 162 an eine Steuer- und Verarbeitungseinheit 163 übermittelt werden, in welcher die Bilddaten verarbeitet werden. Die Ergebnisse können dann mittels einer Ausgabeeinheit 164, wie beispielsweise einem Bildschirm, dem Benutzer angezeigt werden. Die Anzeige kann beispielsweise zur Beurteilung der Druckqualität der bedruckten Materialbahn 101 dienen. Über eine Eingabeeinheit 165, wie beispielsweise eine Tastatur, können Befehle an die Steuer- und Verarbeitungseinheit 163, und somit auch an das Erfassungsmittel 110, übermittelt werden. Die Steuer- und Verarbeitungseinheit 163 kann auch Befehle an den Motor 160 übermitteln.

Bei der Erfassung des Bildes 100 auf der Materialbahn 101 kann es gewünscht sein, einen bestimmten kleineren Bereich innerhalb des größeren erfassten Bereiches zu betrachten, das heißt eine vergrößerte Ansicht des Bildes 100 zu erhalten (Zoomen). Dies kann beispielsweise bei der Beurteilung der Druckqualität einer bedruckten Materialbahn gewünscht sein. Eine beispielhaften Vorrichtung umfasst ein Zoomobjektiv mit variabler Brennweite, welches durch Verschieben von Linsenelementen im Objektiv verschiedene Bereiche eines Bildes erfassen kann. Zoomobjektive können konstruktiv aufwendiger, kostenintensiver und in der Bildqualität schlechter sein als feststehende Objektive mit fester Brennweite.

US 2006/175549 A1 offenbart Systeme und Verfahren mit hoch- und niedrigauflösenden Kameras. Zum Beispiel wird in Übereinstimmung mit einer Ausführungsform der vorliegenden Erfindung ein Kamerasystem offenbart, das breite und schmale Sichtfelder gleichzeitig bereitstellt.

US 5,142,357 A offenbart eine elektronische Stereokamera für die Aufnahme und Wiedergabe von stehenden oder bewegten Bildern. Die Kamera gemäß der Erfindung verwendet eine Signalverarbeitungseinrichtung, um die Videoausgabe der linken und rechten Bildsensoren zu verarbeiten, um die Positionen der linken und rechten Bilder in den linken und rechten Bildfeldern der Kamera zu lokalisieren.

US 2002/0054217 A1 offenbart ein Bildaufnahmegerät zum exakten Aufnehmen und Verbinden von aufgesplitteten Bildern unter Vermeidung einer Vergrößerung der Vorrichtung.

US 2006/147092 A1 offenbart ein digitales Graphik-Inspektionssystem für bedrucktes Papier, das eine Papierbahn, eine Vielzahl von Kameras, eine Bildverarbeitungseinheit und eine Kommunikationssteuerungsschnittstelle umfasst.

Weitere Vorrichtungen zum Erfassen von Bildern sind aus US 2004/008773 A1, US2006/077255 A1, US 6,396,561 B1 und EP 0 863 656 A2 bekannt.

### Zusammenfassung der Erfindung

Die vorliegende Erfindung betrifft eine Kombination einer Vorrichtung zum Erfassen eines Bildes in einer Bildebene und einer Materialbahn, welche eine bedruckte Papierbahn, Folienbahn oder Textilbahn ist, wobei sich die Bildebene auf der Materialbahn befindet, wie in unabhängigen Anspruch 1 definiert.

Vorteilhafte Ausführungsformen sind in den beigefügten abhängigen Ansprüchen definiert.

### Kurzbeschreibung der Zeichnungen

Die vorliegende Erfindung wird nachfolgend anhand bevorzugter Ausführungsformen unter Bezug auf die beigefügten Zeichnungen erläutert.
FIG. 1 zeigt eine Vorrichtung zum Erfassen eines Bildes auf einer Materialbahn;
FIG. 2A zeigt eine Vorrichtung zum Erfassen eines Erfassungsmitteln;
FIG. 2B zeigt eine Draufsicht der in FIG. 2A dargestellten zwei Erfassungsbereiche in der Bildebene;
FIG. 3 zeigt eine Vorrichtung zum Erfassen eines Bildes mit zwei Objektiven;
FIG. 4 zeigt eine Vorrichtung zum Erfassen eines Bildes mit zwei Objektiven sowie einem Belichtungsmittel.
FIG. 5 zeigt eine Vorrichtung zum Erfassen eines Bildes mit einem Erfassungsmittel und einem Belichtungsmittel;
FIG. 5A zeigt eine Vorrichtung zum Erfassen eines Bildes mit einem Erfassungsmittel und zwei Belichtungsmitteln;
FIG. 6 zeigt ein Belichtungsmittel mit vier Lichtleitermitteln und vier Schaltmitteln; und
FIG. 7 zeigt ein Belichtungsmittel mit zwei Lichtquellen.

### Detaillierte Beschreibung der Zeichnungen

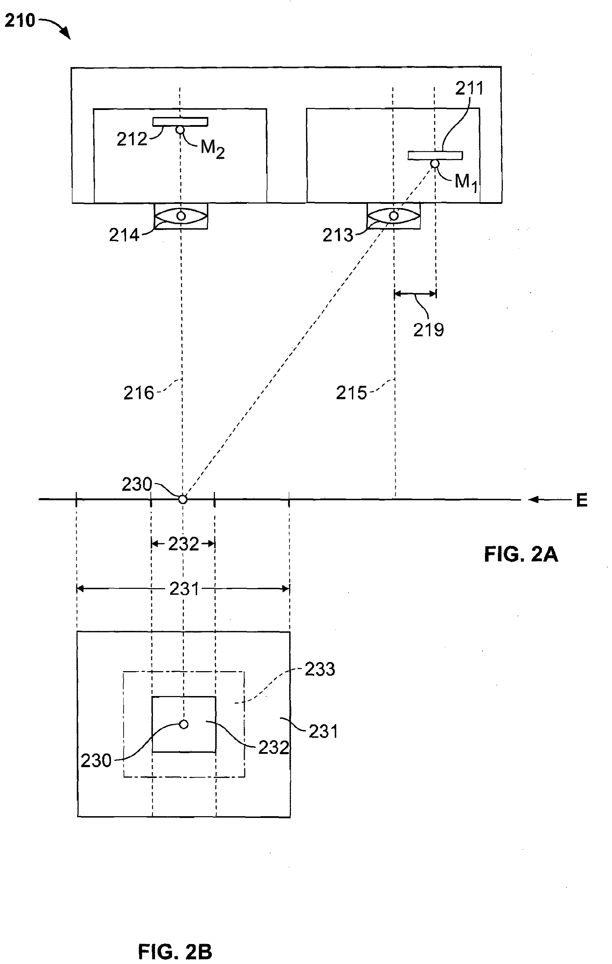

FIG. 2A (nicht maßstabsgetreu) zeigt eine Vorrichtung 210 zum Erfassen eines Bildes in einer Bildebene E. Das Bild kann sich beispielsweise auf einer bedruckten Materialbahn, wie einer Papier- oder Folienbahn, befinden. Das Bild kann sich jedoch auch auf Materialstücken befinden, wie beispielsweise Papierblätter oder Platinen. Die Vorrichtung umfasst ein erstes Sensormittel 211 und ein erstes Abbildungsmittel 213 sowie ein zweites Sensormittel 212 und ein zweites Abbildungsmittel 214. Das erste Sensormittel 211 und das zweite Sensormittel 212 sind jeweils in einer Ebene parallel zu der Bildebene E angeordnet. Das erste Abbildungsmittel 213 bzw. das zweite Abbildungsmittel 214 befindet sich zwischen der Bildebene E und dem ersten Sensormittel 211 bzw. dem zweiten Sensormittel 212. Die Vorrichtung kann einen ersten Erfassungsbereiches 231 und einen zweiten Erfassungsbereiches 232 in der Bildebene E erfassen. In FIG. 2A ist der zweite Erfassungsbereich 232 (Zoombereich) kleiner als der erste Erfassungsbereich 231 (Weitwinkelbereich).

FIG. 2B zeigt eine Draufsicht des in FIG. 2A dargestellten Erfassungsbereiches in der Bildebene E (aus Sicht der in FIG. 2A gezeigten Vorrichtung 210). In FIG. 2B umfasst der zweite Erfassungsbereich 232 einen Teilbereich des ersten Erfassungsbereiches 231 und ist innerhalb des ersten 231 Erfassungsbereiches angeordnet. Der Mittelpunkt des ersten Erfassungsbereiches 231 und der Mittelpunkt des zweiten Erfassungsbereiches 232 fallen in einem zentralen Punkt 230 zusammen, das heißt der zweite Erfassungsbereich 232 ist in der Mitte des ersten Erfassungsbereiches, um einen zentralen Punkt 230 herum, angeordnet. Es sollte verstanden werden, dass auch jede andere Positionierung des zweiten Erfassungsbereiches teilweise oder ganz innerhalb des ersten Erfassungsbereiches möglich ist, beispielsweise in einem Randbereich des ersten Erfassungsbereiches. Die Erfassung des Bildes in der Bildebene kann durch Verwendung eines CMOS-Chips, wie ein CMOS-Matrixchip, als erstes und/oder zweites Sensormittel erfolgen. Es sollte verstanden werden, dass auch eine Erfassung durch jede anderen geeignete Art von Sensormittel, wie ein CCD-Chip, möglich ist.

Bei der in FIG. 2A dargestellten Vorrichtung 210 umfasst das erste Abbildungsmittel 211 eine erste optische Achse 215, welche mit einer senkrechten gestrichelten Linie dargestellt ist und welche durch den Mittelpunkt des Abbildungsmittels 213 verläuft. Analog umfasst das zweite Abbildungsmittel 212 eine zweite optische Achse 216. In FIG. 2A verlaufen die erste optische Achse 215 und die zweite optische Achse 216 parallel zueinander. Das erste und/oder das zweite Abbildungsmittel kann eine oder mehrere Linsen sein oder eine oder mehrere Linsen umfassen. Ein Abbildungsmittel kann beispielsweise auch als ein Linsensystem oder ein Objektiv verstanden werden. Die in FIG. 2A und 2B dargestellten ersten und zweiten Abbildungsmittel 213 und 214 sind jeweils ein feststehendes Objektiv. Rein beispielhaft können ein 20mm Objektiv als erstes Abbildungsmittel und ein 8mm Objektiv als zweites Abbildungsmittel versendet werden. Es sollte jedoch verstanden werden, dass die Auswahl des Abbildungsmittels von der jeweiligen Anwendung abhängig sein kann.

In FIG. 2A ist das erste Sensormittel 211 derart angeordnet, dass der Mittelpunkt M1 des ersten Sensormittels 211 einen Versatz 219 zu der ersten optischen Achse 215 aufweist. Der Versatz 219 ist in FIG. 2A als Abstand zwischen der durch den Mittelpunkt des ersten Abbildungsmittels 213 verlaufenden ersten optischen Achse 215 und der durch den Mittelpunkt M1 verlaufenden senkrechten gestrichelten Linie dargestellt. Der Mittelpunkt M1 des ersten Sensormittels 211 befindet sich auf einer Linie, welche durch einen Mittelpunkt 230 des ersten Erfassungsbereiches 231 und einen Mittelpunkt des ersten Abbildungsmittels 213 verläuft. Es ist somit möglich, zwei unterschiedlich großer Erfassungsbereiche, beispielsweise einen Zoombereich und einen Weitwinkelbereich, mittels zweier feststehender Objektive zu erfassen. Die Position und somit der Versatz des ersten Sensormittels 211 lässt sich durch Strahlensatz berechnen. Die Größe des Versatzes ist von der jeweiligen Konstruktion der Vorrichtung (wie beispielsweise Abstand zur Bildebene E) abhängig. Die Größe des Versatzes kann rein beispielhaft weniger als 1 mm, beispielsweise 0,7 mm, sein.

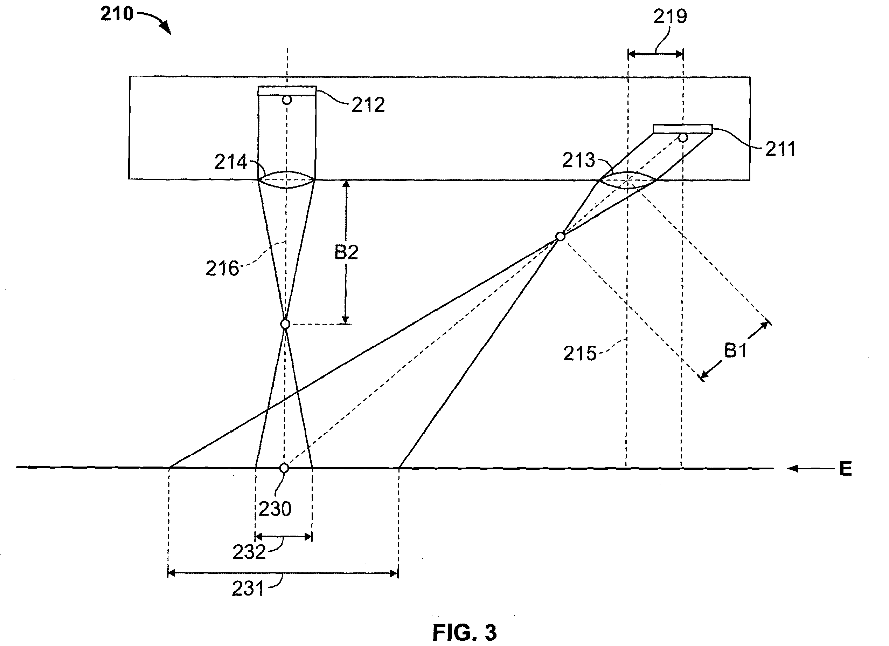

Wie in FIG. 3 dargestellt, weisen das erste Abbildungsmittel 213 und das zweite Abbildungsmittel 214 unterschiedliche Brennweiten auf. Das erste Abbildungsmittel besitzt eine Brennweite B1 und das zweite Abbildungsmittel 214 besitzt eine Brennweite B2. Das erste Abbildungsmittel 213 weist eine kürzere Brennweite auf als das zweite Abbildungsmittel 214, das heißt die Brennweite B1 ist kleiner als die Brennweite B2. Das erste Sensormittel 211 und das erste Abbildungsmittel 213 mit der kürzeren Brennweite B1 sind derart angeordnet, dass der erste Erfassungsbereich 231, wie in FIG. 2A und 2B dargestellt der Weitwinkelbereich, durch das erste Abbildungsmittel 213 abgebildet und von dem ersten Sensormittel 211 erfasst wird. Analog sind das zweite Sensormittel 212 und das zweite Abbildungsmittel 214 derart angeordnet sind, dass der zweite Erfassungsbereich 232, wie in FIG. 2A und 2B dargestellt der Zoombereich, durch das zweite Abbildungsmittel 214 abgebildet und von dem zweiten Sensormittel 212 erfasst wird. In FIG. 3 erfasst das zweite Sensormittel 212 im Vergleich zu dem ersten Sensormittel 211 ein vergrößertes Bild, das heißt das zweite Sensormittel 212 erfasst einen kleineren Bildausschnitt (Zoom) als das erste Sensormittel 211. Wie bereits erwähnt sind das erste Sensormittel 211 und das zweite Sensormittel 212 jeweils in einer Ebene parallel zu der Bildebene E angeordnet ist. Diese Ebenen sind wie dargestellt vorzugsweise zwei unterschiedliche Ebenen. Die beiden Erfassungsmittel sind aufgrund der unterschiedlichen Brennweiten B1 und B2 in unterschiedlichen Ebenen angeordnet. Abhängig von der jeweiligen Konstruktion können die zwei Ebenen jedoch auch dieselbe Ebene bilden.

In einer Implementierung kann das zweite Sensormittel 212 zentriert zu der zweiten optischen Achse 216 angeordnet sein, wie in FIG. 2A und 2B und FIG. 3 dargestellt. Der Mittelpunkt M2 des zweiten Erfassungsmittels 212 liegt dabei auf der optischen Achse 216 des zweiten Erfassungsmittels.

In einer anderen Implementierung kann das zweite Sensormittel aber auch in gleicher Weise einen Versatz zur optischen Achse aufweisen, wie oben mit Bezug auf das erste Erfassungsmittel beschrieben. In einem solchen Fall ist das zweite Sensormittel derart angeordnet, dass der Mittelpunkt des zweiten Sensormittels einen Versatz zu der zweiten optischen Achse aufweist. Das zweite Sensormittel ist dann folglich derart angeordnet, dass sich der Mittelpunkt des zweiten Sensormittels auf einer Linie befindet, welche durch einen Mittelpunkt des zweiten Erfassungsbereiches und einen Mittelpunkt des zweiten Abbildungsmittels verläuft.

Es sollte verstanden werden, dass mehr als ein zweites Sensormittel und mehr als ein zweites Abbildungsmittel zum Erfassen von mehr als eines zweiten Erfassungsbereiches verwendet werden kann. Rein beispielhaft können insgesamt drei Sensormittel und drei Abbildungsmittel zum Erfassen von jeweils einem von drei Erfassungsbereichen verwendet werden. Der dritte Erfassungsbereich kann dann innerhalb des zweiten Erfassungsbereiches angeordnet sein und der zweite Erfassungsbereich innerhalb des ersten Erfassungsbereiches. Somit können mehrere Zoombereiche realisiert werden.

Es sollte verstanden werden, dass das oben Beschriebene austauschbar ist für das erste bzw. das zweite Erfassungsmittel. Das erste Sensormittel kann zentriert zu der ersten optischen Achse angeordnet sein und das zweite Sensormittel kann einen Versatz zu der zweiten optischen Achse aufweisen. Ebenso können beide Erfassungsmittel, wie oben beschrieben, einen Versatz zu der jeweiligen optischen Achse aufweisen. Auch kann der zweite Erfassungsbereich durch das erste Abbildungsmittel abgebildet und von dem ersten Sensormittel erfasst werden und entsprechend der erste Erfassungsbereich durch das zweite Abbildungsmittel abgebildet und von dem zweiten Sensormittel erfasst werden.

In Zusammenhang mit einer Vorrichtung zum Erfassen eines Bildes ist auch die weitere Verarbeitung der gewonnen Bilddaten von Interesse (Bildverarbeitung). Es wird nun ein Verfahren zum Auswerten von Bilddaten, welches nicht Teil der Erfindung ist, mit Bezugnahme auf FIG. 2A und 2B beschrieben. Das Verfahren kann in Verbindung mit der oben beschrieben Vorrichtung durchgeführt werden. Das Verfahren kann die folgenden Schritte umfassen:
- Bereitstellen eines ersten Erfassungsmittels und mindestens eines zweiten Erfassungsmittels zum Erfassen eines Bildes in der Bildebene E,
- Erfassen des ersten Erfassungsbereiches 231 zum Erhalten erster Bilddaten,
- Erfassen eines zweiten Erfassungsbereiches 232 zum Erhalten zweiter Bilddaten, und
- Auswerten der ersten und/oder der zweiten Bilddaten.

Wie in FIG. 2A dargestellt umfasst das erste Erfassungsmittel das erstes Sensormittel 211 und das erste Abbildungsmittel 213. Das zweite Erfassungsmittel umfasst entsprechend das zweite Sensormittel 212 und das zweite Abbildungsmittel 214. Das Erfassen des ersten Erfassungsbereiches 231 wird mit dem ersten Erfassungsmittel durchgeführt und das Erfassen des zweiten Erfassungsbereiches 232 wird mit dem zweiten Erfassungsmittel durchgeführt. Der zweite Erfassungsbereich 232 befindet sich in FIG. 2A und 2B innerhalb des ersten Erfassungsbereiches 231. Das zweite Erfassungsmittel 212 erfasst im Vergleich zu dem ersten Erfassungsmittel 211 ein vergrößertes Bild (einen kleineren Bildausschnitt). Weisen die ersten Bilddaten eine erste Auflösung und die zweiten Bilddaten eine zweite Auflösung auf, so ist die erste Auflösung kleiner als die zweite Auflösung. Es werden folglich zwei unterschiedliche Auflösungen bereitgestellt, welche in der Bildverarbeitung verwendet werden können. Die Auflösung der Bilddaten kann beispielsweise als Anzahl der Bildpunkte im Verhältnis zu einer physikalische Längeneinheit angegeben werden, wie beispielsweise in dpi (dots per inch) oder ppi (pixel per inch). Die ersten und zweiten Bilddaten können zusammen in einer Speichereinheit gespeichert werden.

In einer Implementierung kann das Auswerten Berechnen von Bilddaten eines in FIG. 2B dargestellten Darstellungsbereiches 233 aus den ersten und/oder den zweiten Bilddaten umfassen (digitales Zoomen). Das Auswählen der ersten und/oder der zweiten Bilddaten kann in einer Verarbeitungseinheit erfolgen, welche beispielsweise die Bilddaten dann entsprechend aus der Speichereinheit ausliest. Die Auswahl kann automatisch oder durch einen Benutzer erfolgen. Erfolgt die Auswahl automatisch, so kann diese wie folgt gestaltet sein. Wenn sich der Darstellungsbereich 233 innerhalb des zweiten Erfassungsbereiches 232 befindet (in FIG. 2B nicht dargestellt), werden die zweiten Bilddaten ausgewertet zum Berechnen von Bilddaten des Darstellungsbereiches 233. Wenn sich der Darstellungsbereich 233 hingegen innerhalb des ersten Erfassungsbereiches 231 und außerhalb des zweiten Erfassungsbereiches 232 befindet (wie in FIG. 2B mit einer gestrichelt gepunkteten Linie dargestellt), dann werden die ersten Bilddaten ausgewertet zum Berechnen von Bilddaten des Darstellungsbereiches 233. Das Zoomen erfolgt demnach nicht optisch, wie beispielsweise mit einem Zoomobjektiv, sondern digital. Durch Bereitstellen zweier unterschiedlicher Auflösungen ist es möglich innerhalb eines großen Bildbereiches unter Bereitstellung einer genügend hohen Auflösung digital zu zoomen, ohne Verwendung eines Zoomobjektivs.

Das Auswerten und Berechnen von Bilddaten des Darstellungsbereiches 233 aus den ersten und/oder den zweiten Bilddaten kann in einer Verarbeitungseinheit erfolgen. Die Bilddaten des gewünschten Darstellungsbereiches 233 können mit üblichen Methoden der Bildverarbeitung ermittelt werden. Beispielsweise kann die Berechnung durch Ermittlung von Interpolationswerte zwischen den einzelnen Pixelwerten der ersten und/oder zweiten Bilddaten erfolgen. Der gewünschte Darstellungsbereich kann dann mit Hilfe einer Ausgabeeinheit, wie beispielsweise einem Monitor, ausgegeben werden. Auch ist eine Bild-in-Bild Funktion möglich, indem in einem großen Fenster auf der Ausgabeeinheit ein aus den ersten Bilddaten ermittelter Darstellungsbereich angezeigt wird und in einem kleinen Fenster auf der Ausgabeeinheit ein aus den zweiten Bilddaten ermittelter Darstellungsbereich, oder umgekehrt.

Der Darstellungsbereich 233 kann vorgegeben sein oder frei vom Benutzer gewählt werden. Auch können kontinuierlich in der Größe zunehmende (Rauszoomen) oder abnehmende (Reinzoomen) Darstellungsbereiche 233 verwendet werden und deren Bilddaten dann aus den ersten und/oder den zweiten Bilddaten sukzessive berechnet werden (kontinuierliches digitales Zoomen). Im dem Fall, dass die Darstellungsbereiche kontinuierlich in der Größe abnehmen, kann, sobald der Darstellungsbereich 233 innerhalb des zweiten Erfassungsbereiches 232 fällt, vom Auswerten der ersten Bilddaten mit geringer Auflösung auf Auswerten der zweiten Bilddaten mit höheren Auflösung umgeschaltet werden. Es ist somit möglich, innerhalb eines großen Bildbereich unter Bereitstellung einer genügend hohen Auflösung kontinuierlich ohne Zeitverzögerung digital zu zoomen.

Es kann auftreten, dass die erfassten Bilddaten keine wirklichkeitsgetreue Farbwiedergabe aufweisen, da sich die RGB (Rot-Grün-Blau) Anteile verschieben können, beispielsweise wenn sich die Belichtungsverhältnisse ändern. In einer weiteren Implementierung, welche nicht Teil der Erfindung ist, kann das Verfahren daher Erfassen einer Farbreferenz, wie beispielsweise eines Farbreferenzstreifens, zum Erhalten von Farbreferenzdaten umfassen (Farbkalibrierung). Das Erfassen der Farbreferenz kann im Rahmen des Erfassens des ersten oder des zweiten Erfassungsbereiches erfolgen. Hierzu kann sich die Farbreferenz in einem Randbereich des in FIG. 2B dargestellten ersten Erfassungsbereiches 231 befinden. Die Farbreferenz kann beispielsweise in dem ersten Erfassungsmittel (siehe FIG. 2A) angeordnet sein, und auf einen Randbereich des ersten Erfassungsbereiches 231 abgebildet werden. Im Rahmen des Auswertens können dann Farbkorrekturdaten mit Hilfe der Farbreferenzdaten ermittelt werden, beispielsweise durch Vergleichen der Farbreferenzdaten mit den Bilddaten. Wird eine Abweichung der Bilddaten von den Farbreferenzdaten festgestellt, so können die Bilddaten entsprechend farbkorrigiert werden für jeden beliebigen gewählten Darstellungsbereich. Mit einem Zoomobjektiv wäre dies nicht möglich, da, wenn sich die Farbreferenz in einem Randbereich befindet, nicht bei jedem gewählten Darstellungsbereich diese Farbreferenz erfasst werden würde. Durch Verwendung von zwei Erfassungsmitteln, welche feststehende Objektive umfassen, kann, wie oben beschrieben, für jeden gewählten Darstellungsbereich eine Farbkorrektur bereitgestellt werden.

Es sollte selbstverständlich verstanden werden, dass die oben beschriebenen Vorrichtungen mit den oben beschrieben Verfahren betrieben werden können, ebenso wie die oben beschrieben Verfahren mit den oben beschriebenen Vorrichtungen durchgeführt werden können.

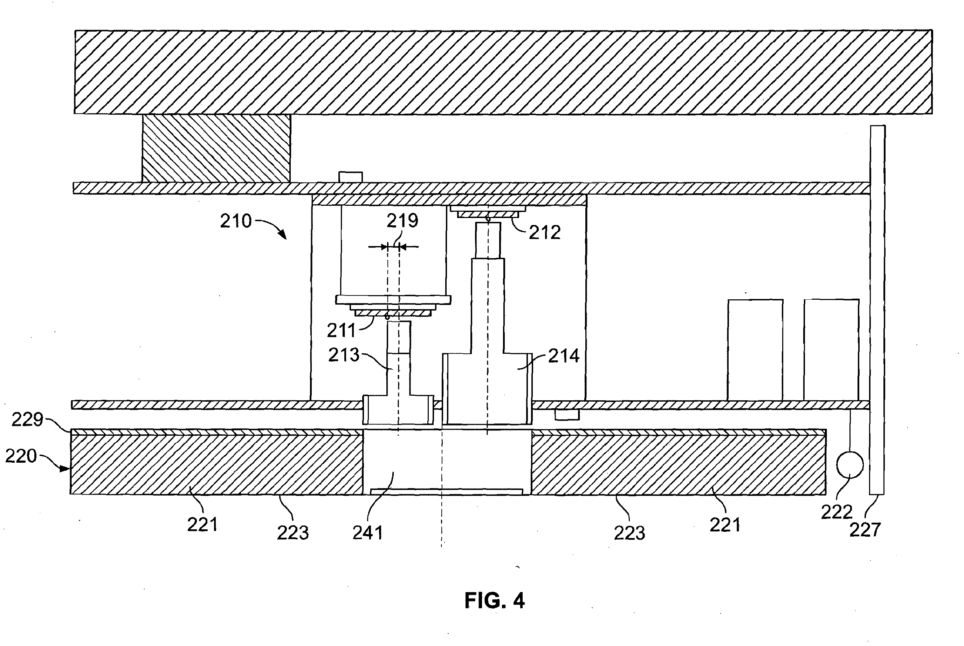

FIG. 4 zeigt eine Vorrichtung 210 zum Erfassen eines Bildes in einer Bildebene (nicht gezeigt) mit zwei Abbildungsmitteln bzw. Objektiven 213 und 214 sowie einem Belichtungsmittel 220. Zu einem Erfassungszeitpunkt wird ein erster Erfassungsbereich (Weitwinkelbereich) durch das erste Abbildungsmittel 213 abgebildet und von dem ersten Sensormittel 211 erfasst und/oder ein zweiter Erfassungsbereich (Zoombereich) wird durch das zweite Abbildungsmittel 214 abgebildet und von dem zweiten Sensormittel 212 erfasst. Die Auswahl des ersten und/oder zweiten Erfassungsbereiches kann automatisch oder durch einen Benutzer über eine Steuereinheit erfolgen. Zu dem oben genannten Erfassungszeitpunkt kann das Bild zudem belichtet werden mittels des Belichtungsmittels 220. Das in FIG. 4 gezeigte Belichtungsmittel 220 umfasst ein Lichtleitermittel 221, welches in einem Bereich, in dem das erste Objektiv 213 und das zweite Objektiv 214 angeordnet sind, eine durchgängige Aussparung 241 aufweist. Belichtungsmittel , welche nicht Teil der Erfindung sind, werden im Folgenden näher beschrieben werden.

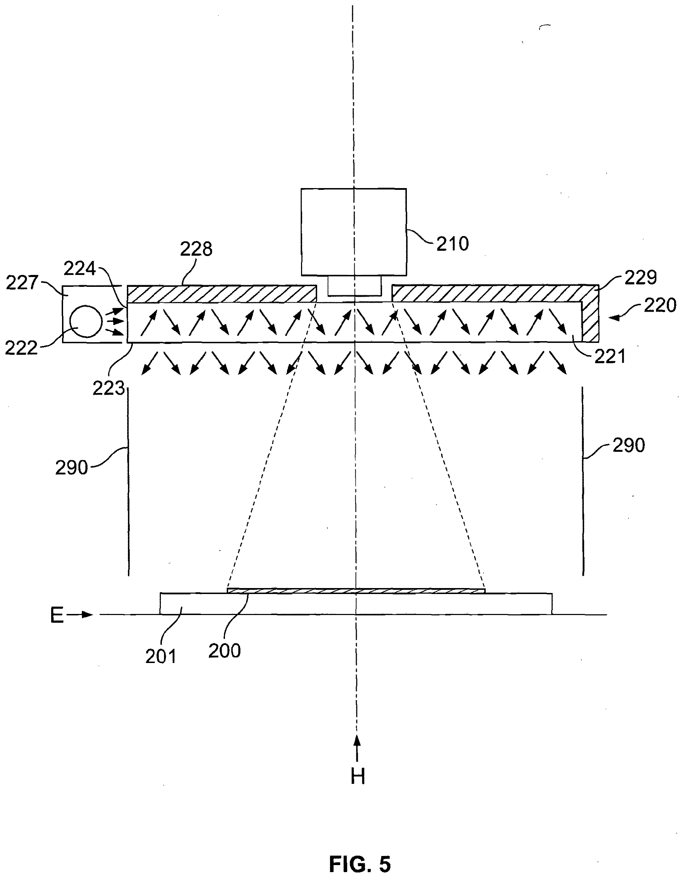

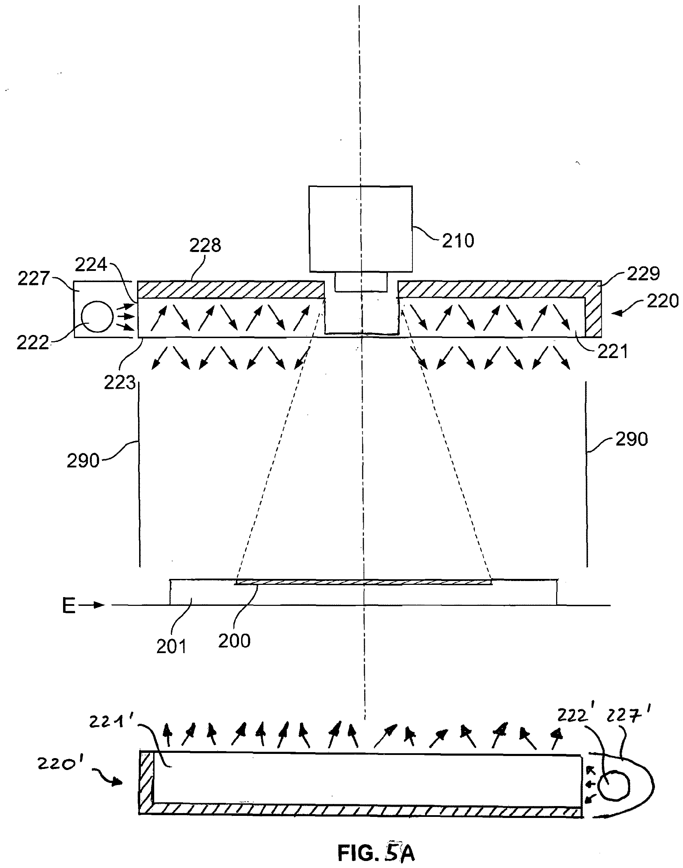

FIG. 5 (nicht maßstabsgetreu) zeigt eine Vorrichtung zur Erfassung eines Bildes 200 mit einem Erfassungsmittel 210 und einem Belichtungsmittel 220. Das Bild befindet sich auf einem Objekt 201, wie beispielsweise einer Materialbahn, in einer Objektebene E. Das Bild kann ein Standbild, ein Videobild oder jede andere angemessene Form eines Bildes sein. Das Erfassungsmittel ist entlang einer Hauptachse H angeordnet. Das Erfassungsmittel kann beispielsweise eine CCD- oder CMOS-Kamera oder jede andere geeignete Art eines Erfassungsmittels sein. In FIG. 5 umfasst das Belichtungsmittel 220 zum Erzeugen diffusen Lichtes ein Lichtleitermittel 221 und eine Lichtquelle 222. Die Lichtquelle 222 ist derart angeordnet, dass deren ausgesendetes Licht in das Lichtleitermittel 221 eingekoppelt wird und in dem Lichtleitermittel 221 propagiert. Das in dem Lichtleitermittel 221 propagierende Licht tritt dann in einem Oberflächenbereich 223, oder Seite 223, des Lichtleitermittels 221, welcher dem Bild 200 zugewandt ist, diffus aus. Somit kann eine gleichmäßige Ausleuchtung bei der Erfassung des Bildes 200 bereitgestellt werden, wodurch auch eine gute Bildqualität erzielt werden kann.

Es können zusätzlich auch weitere Mittel verwendet werden, um eine optimale Ausleuchtung zu erreichen, wie beispielsweise die in FIG. 5 dargestellten Wände 290 mit diffuser weißer Oberfläche, welche einen Kanal zwischen dem Belichtungsmittel 220 und dem Bild 200 bereitstellen. Auf diese Weise kann das diffuse Licht optimal auf den auszuleuchtenden Bereich gerichtet werden und die Leuchtstärke in diesem Bereich kann erhöht werden. Hierdurch kann beispielsweise eine sehr gute Wiedergabe von Hologrammen oder spiegelnden Oberflächen gewährleistet werden.

In FIG. 5 ist das Lichtleitermittel 221 eine ebene Platte und ist um die Hauptachse H des Erfassungsmittels 210 zentriert angeordnet. Die ebene Platte befindet sich in einer Ebene parallel zu einer Objektebene E, wodurch wiederum eine gleichmäßige Ausleuchtung erreicht werden kann. Durch Verwendung einer Platte ist das Belichtungsmittel leicht und in verschiedensten Größen herstellbar. Somit kann auch die Vorrichtung leicht in verschiedenen Baugrößen bereitgestellt werden. Das Lichtleitermittel kann auch exzentrisch um die Hauptachse des Erfassungsmittels angeordnet sein. Ebenso kann das Lichtleitermittel auch abseits bzw. neben dem Erfassungsmittel angeordnet sein, solange mit dieser Anordnung eine der Anwendung entsprechende optimale Ausleuchtung erreicht werden kann.

Zur Einkopplung des Lichts ist die Lichtquelle 222 in der Nähe der Oberflächenbereiche 224, der Seite 224, der Platte 221 angeordnet. Um eine verbesserte Einkopplung des Lichtes zu erreichen, ist ein Reflektor 227 um die Lichtquelle 222 herum angeordnet. Der Reflektor 227 reflektiert das von der Lichtquelle 222 ausgesendete Licht, welches in die übrigen Raumrichtungen ausgesendet wird und welches ohne Vorhandensein des Reflektors nicht in das Lichtleitermittel eingekoppelt werden könnte. Der Reflektor 227 kann beispielsweise rund ausgebildet sein, um so eine optimale Reflektion des Lichtes auf die Seite 224 hin zu erreichen. Ist der Reflektor 227 parabelförmig ausgebildet, so kann die Lichtquelle 222 beispielsweise nahe dem Brennpunkt der Parabel angeordnet sein. Es können gleichwohl auch andere geeignete Mittel für eine verbesserte Einkopplung verwendet werden. Die Oberflächenbereiche 224, in denen das ausgesendete Licht eingekoppelt wird, können dabei glatt sein, insbesondere poliert oder auf sonstige Weise oberflächenbehandelt. Das eingekoppelte Licht propagiert in dem Lichtleitermittel 221 (in FIG. 5 durch Pfeile angedeutet). An der dem Bild 200 abgewandten Seite des Lichtleitermittels 221 wird das propagierende Licht (total-) reflektiert. Hierzu kann das Lichtleitermittel eine Verspiegelung oder Reflektorschicht 228 aufweisen. Es können jedoch auch andere geeignete Mittel zum Herbeiführen von Reflexion verwendet werden. Auch auf der der Seite 224 gegenüberliegenden Seite der Platte wird eine Totalreflexion erreicht, in diesem Fall durch die Verspiegelung oder Reflektorschicht 229. Ein Unterschied zwischen Verspiegelung und Reflektorschicht kann in der Lichtmenge bestehen, welche auf der Seite 223 diffus austritt. Wenn eine Reflektorschicht das Licht in dem Lichtleitermittel 221 diffus reflektiert, kann, im Vergleich zu einer Verspiegelung, mehr Licht auf der Seite 223 diffus austreten. Mit einer Verspiegelung hingegen kann eine gleichmäßigere Lichtverteilung durch Mehrfachreflexion in dem Lichtleitermittel 221 erreicht werden. Es soll hier verstanden werden, dass ein Oberflächenbereich des Lichtleitermittels sowohl ein Teilbereich einer Seite als auch eine gesamte Seite des Lichtleitermittels sein kann.

Das Lichtleitermittel 221 der FIG. 5 ist folglich derart ausgestaltet, dass das propagierende Licht an allen Oberflächenbereichen bzw. Seiten des Lichtleitermittels 221 total reflektiert wird, beispielsweise durch eine Verspiegelung oder Reflektorschicht 228, 229, mit Ausnahme der Oberflächenbereiche 224, in denen das ausgesendete Licht eingekoppelt wird, und der Oberflächenbereiche 223, in denen das propagierende Licht diffus austritt. Um zu erreichen, dass das propagierende Licht in dem Oberflächenbereich 223 diffus austritt, kann das Lichtleitermittel 221 aus einem Material mit Streupartikeln hergestellt sein. Das Material des Lichtleitermittels selber kann beispielsweise ein transparentes Polymer, wie PMMA sein. Das Material kann jedoch auch Glas oder ähnliches sein. Die in dem Material des Lichtleitermittels enthaltenen Streupartikel können beispielsweise organisch und/oder anorganisch sein. Die Streupartikel weisen einen von dem Brechungsindex des Lichtleitermaterials abweichenden Brechungsindex auf. Die Intensität der Lichtstreuung ist unter anderem abhängig von der Größe der Streupartikel und dem Unterschied zwischen den Brechungsindizes des Lichtleitermaterials und der Streupartikel. Das Lichtleitermittel kann auch von anderer geeigneter Art sein, wie beispielsweise eine spezielle optische Folie oder ähnliches, wenn damit erreicht wird, dass das Licht diffus austritt.

In FIG. 5 ist das Lichtleitermittel 221 zwischen dem Erfassungsmittel 210 und dem Bild 200 angeordnet. Das Lichtleitermittel 221 kann aus transparentem Material, insbesondere Glas oder Acrylglas, hergestellt sein. In einem solchen Fall kann das Erfassungsmittel 210, wie in FIG. 5 gezeigt, das Bild 200 durch das Lichtleitermittel 221 hindurch erfassen. Das Belichtungsmittel 220 kann beispielsweise direkt an dem Erfassungsmittel 210 oder an einem das Erfassungsmittel 210 tragenden Teil angebracht werden. Somit kann eine kompakte Bauweise der Vorrichtung realisiert werden und die Vorrichtung kann eine geringe Einbautiefe aufweisen. Das Erfassungsmittel 210 und das Belichtungsmittel 220 können so eine Einheit bilden, welche leicht einsetzbar sein kann. Zudem kann die Vorrichtung in vielfältiger Weise verwendet werden, ohne dass für jede Anwendung ein individuelles und aufwendiges Beleuchtungskonzept entwickelt werden muss.

Das Lichtleitermittel kann auch derart ausgestaltet sein, dass sich eine Aussparung in dem Bereich befindet, in dem das Erfassungsmittel 210 das Bild 200 erfasst (in FIG. 5 ist dieser Bereich mit zwei diagonal verlaufenden gestichelten Linien dargestellt). In FIG. 5 befindet sich eine solche Aussparung in der Reflektorschicht 228. Die Aussparung kann, wie dargestellt, durchgehend sein, kann aber auch nur eine Aushöhlung bilden, solange dabei gewährleistet wird, dass das Erfassungsmittel das Bild erfassen kann. Dies bedeutet, dass in dem Bereich, in dem das Erfassungsmittel das Bild erfasst, auch eine dünne Reflektorschicht vorgesehen sein kann, durch welche hindurch das Erfassungsmittel das Bild erfassen kann. Zudem kann sich die Aussparung beispielsweise auch direkt in dem Lichtleitermittel befinden. Diese Aussparung kann sich mittig im Lichtleiterleitermittel befinden, um einen zentralen Punkt herum angeordnet, kann sich aber auch an jeder anderen geeigneten Position im Lichtleitermittel befinden. Das Lichtleitermittel ist in dem Bereich, in dem das Erfassungsmittel das Bild erfasst, ganz lichtdurchlässig oder halb lichtdurchlässig.

Das Lichtleitermittel 221 kann nicht nur direkt zwischen dem Erfassungsmittel 210 und dem Bild 200 (wie in FIG. 5 gezeigt) angeordnet sein, sondern kann sich, wie bereits erwähnt, in jeder für die jeweilige Anwendung geeigneten Position befinden. Wie in FIG. 5A gezeigt kann ein Belichtungsmittel 220' auf der dem Erfassungsmittel 210 gegenüberliegenden Seite des Bildes 200 angeordnet sein. Wie mit Bezug auf FIG. 5 erläutert, weist auch das Belichtungsmittel 220' ein Lichtleitermittel 221' und eine Lichtquelle 222' auf, welche derart angeordnet ist, dass deren ausgesendetes Licht in das Lichtleitermittel 221' eingekoppelt wird und in dem Lichtleitermittel 221' propagiert. Ebenso wie mit Bezug auf FIG. 5 beschrieben kann ein Reflektor 227' um die Lichtquelle 222' herum angeordnet sein. Diese Anordnung der dem Erfassungsmittel 210 gegenüberliegenden Seite des Bildes 200 kann zum Beispiel bei der Erfassung eines Bildes auf einer transparenten Materialbahn Anwendung finden. In diesem Fall kann das Belichtungsmittel 220' die Materialbahn 201 von der einen Seite belichten, während das Erfassungsmittel 210 das Bild von der anderen Seite aufnimmt (Rückseitenbelichtung). Die Verwendung eines hellen Hintergrundbleches und eventuelles Auftreten von Schattenbildung kann so vermieden werden. Zudem wird wiederum eine gleichmäßige Ausleuchtung erreicht.

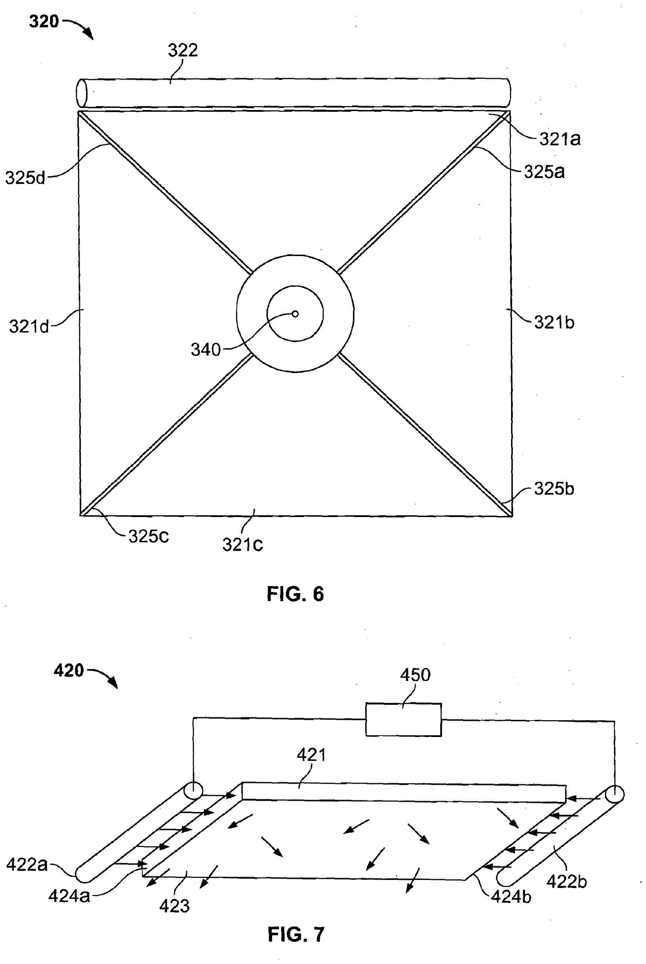

FIG. 6 zeigt ein Belichtungsmittel 320 mit vier Lichtleitermitteln 321a-d und vier Schaltmitteln 325a-d. Die Lichtleitermittel 321a-d und die Schaltmittel 325a-d sind in FIG. 6 alternierend zueinander angeordnet. Die Schaltmittel 325a-d dienen zum selektiven Sperren oder Durchlassen des in einem der Lichtleitermittel 321a-d propagierenden Lichts. Die Schaltmittel können beispielsweise LCDs oder jede andere geeignete Art von lichtschaltenden Mitteln sein. Das Licht wird mittels einer Lichtquelle 322 an einer Seite des Lichtleitermittels 321a eingekoppelt.

Das eingekoppelte Licht propagiert in dem Lichtleitermittel 325a und in dem Fall, in dem beispielsweise Schaltmittel 325d Licht sperrt und Schaltmittel 325a Licht durchlässt, in das Lichtleitermittel 321b propagieren. Wenn das Schaltmittel 325b wiederum Licht durchlässt, kann das Licht in das Schaltmittel 321c propagieren und so weiter. Somit können selektiv nur bestimmte Raumbereiche ausgeleuchtet werden, wie es beispielsweise bei der Erfassung von Textilien von Bedeutung sein kann. Die Beleuchtung kann somit einfach eingestellt werden, ohne dass für jede Anwendung ein individuelles und aufwendiges Beleuchtungskonzept entwickelt werden muss.

In FIG. 6 weisen die vier Lichtleitermittel 321a-d eine dreieckige Form auf. Die vier dreieckigen Lichtleitermittel 321a-d und die vier Schaltmittel 325a-d sind um einen zentralen Punkt 340 herum angeordnet und bilden eine geschlossene Fläche. Im Bereich des zentralen Punktes 340 kann sich eine Aussparung befinden, durch welche das Erfassungsmittel das Bild erfassen kann. Es sollte bemerkt werden, dass das Belichtungsmittel jede beliebige Anzahl von Lichtleitermitteln umfassen kann, beispielsweise lediglich 2 oder auch 8 oder mehr Lichtleitermittel. Zum Beispiel können zwei rechteckige Belichtungsmittel durch ein Schaltmittel getrennt nebeneinander angeordnet werden oder es können auch 8 dreieckige Lichtleitermittel, analog zu FIG. 6, in einem Achteck angeordnet werden. Die Schaltmittel können in einer Ebene angeordnet sein, sie können jedoch auch in mehreren Ebenen, einen Winkel zueinander bildend angeordnet sein. Beispielsweise können die in FIG. 6 gezeigten vier Lichtleitermittel eine Pyramide bildend angeordnet sein. Jede geeignete Form der Anordnung und Ausgestaltung der Lichtleitermittel und Schaltmittel ist möglich.

Es können auch mehrere Lichtquellen vorhanden sein, die Licht in die Lichtleitermittel einkoppeln. Somit kann selektiv die Beleuchtungsstärke ausgewählt und variiert werden. Die Beleuchtungsstärke kann so hoch gewählt werden, dass das Erfassungsmittel nur zum Zeitpunkt des Blitzens das Bild mit ausreichend hoher Bildqualität erfassen kann. Somit kann beispielsweise auch die Funktion einer Iris des Erfassungsmittels ersetzt werden.

FIG. 7 zeigt ein Belichtungsmittel 420 mit zwei Lichtquellen, einer ersten Lichtquelle 422a und einer zweiten Lichtquelle 422b. Die erste und zweite Lichtquelle 422a und 422b sind an sich gegenüberliegenden Seiten 424a und 424b eines Lichtleitermittels 421 angeordnet. Auf den Seiten 424a und 424b kann jeweils das ausgesendete Licht in das Lichtleitermittel 421 eingekoppelt werden. Das Licht propagiert dann in dem Lichtleitermittel 421 und tritt auf der Seite 423 des Lichtleitermittels 421 diffus aus (in FIG. 7 mit Pfeilen angedeutet). Die erste und die zweite Lichtquelle 422a und 422b können Lichtquellen gleicher aber verschiedener Art sein. Sind sie verschiedener Art, so kann beispielsweise die eine eine UV-Lichtquelle und die andere eine Weißlicht-Lichtquelle sein. Diese verschiedenen Lichtquellen können dann für unterschiedliche Anwendungen verwendet werden. In einem solchen Fall kann die Vorrichtung Steuermittel 450 zum selektiven An-/Ausschalten der ersten oder zweiten Lichtquelle 422a, 422b umfassen.

Lichtquelle kann beispielsweise eine Gasentladungslampe, insbesondere eine Blitzröhre, sein, wie zum Beispiel eine Xenon-Blitzröhre. Die Verwendung jeder geeigneten Art von Lichtquelle, welche einen Lichtblitz erzeugen kann, ist möglich. Der Blitz kann dabei im Bereich von einigen Mikrosekunden, wie beispielsweise 1 bis 100 µs, beispielsweise 10 µs, liegen.

## Patentansprüche

1. Kombination einer Vorrichtung (210) zum Erfassen eines Bildes in einer Bildebene (E) und einer Materialbahn, welche eine bedruckte Papierbahn, Folienbahn oder Textilbahn ist, wobei sich die Bildebene (E) auf der Materialbahn befindet, wobei die Vorrichtung (210) umfasst:
ein erstes Sensormittel (211) und ein erstes Abbildungsmittel (213); und
mindestens ein zweites Sensormittel (212) und mindestens ein zweites Abbildungsmittel (214);
wobei die Vorrichtung geeignet ist zum Erfassen eines ersten Erfassungsbereiches (231) und mindestens eines zweiten Erfassungsbereiches (232) in der Bildebene (E), wobei das erste Sensormittel (211) und das erste Abbildungsmittel (213) derart angeordnet sind, dass der erste Erfassungsbereich (231) durch das erste Abbildungsmittel (213) abgebildet und von dem ersten Sensormittel (211) erfasst wird,
wobei das zweite Sensormittel (212) und das zweite Abbildungsmittel (214) derart angeordnet sind, dass der zweite Erfassungsbereich (232) durch das zweite Abbildungsmittel (214) abgebildet und von dem zweiten Sensormittel (212) erfasst wird,
wobei die Sensormittel (211, 212) und die Abbildungsmittel (213, 214) derart angeordnet sind, dass der zweite Erfassungsbereich (232) kleiner ist als der erste Erfassungsbereich (231),
wobei die Sensormittel (211, 212) und die Abbildungsmittel (213, 214) derart angeordnet sind, dass der zweite Erfassungsbereich (232) einen Teilbereich des ersten Erfassungsbereiches (231) umfasst,
wobei das erste Abbildungsmittel (211) eine erste optische Achse (215) und das zweite Abbildungsmittel (212) eine zweite optische Achse (216) umfasst, wobei die erste optische Achse (215) und die zweite optische Achse (216) parallel zueinander verlaufen, und
wobei das erste Sensormittel (211) derart angeordnet ist, dass ein Mittelpunkt (M1) des ersten Sensormittels (211) einen Versatz (219) zu der ersten optischen Achse (215) aufweist, und/oder das zweite Sensormittel (212) derart angeordnet ist, dass ein Mittelpunkt (M2) des zweiten Sensormittels (212) einen Versatz zu der zweiten optischen Achse (216) aufweist.

2. Kombination gemäß Anspruch 1, wobei die Sensormittel (211, 212) und die Abbildungsmittel (213, 214) derart angeordnet sind, dass der zweite Erfassungsbereich (232) innerhalb des ersten (231) Erfassungsbereiches angeordnet ist.

3. Kombination gemäß Anspruch 1 oder 2, wobei das erste Sensormittel (211) derart angeordnet ist, dass sich ein Mittelpunkt (Ml) des ersten Sensormittels (211) auf einer Linie befindet, welche durch einen Mittelpunkt des ersten Erfassungsbereiches (231) und einen Mittelpunkt des ersten Abbildungsmittels (213) verläuft.

4. Kombination gemäß einem der vorhergehenden Ansprüche, wobei das zweite Sensormittel (212) zentriert zu der zweiten optischen Achse (216) angeordnet ist.

5. Kombination gemäß einem der vorhergehenden Ansprüche, wobei das zweite Sensormittel (212) derart angeordnet ist, dass sich ein Mittelpunkt (M2) des zweiten Sensormittels (212) auf einer Linie befindet, welche durch einen Mittelpunkt des zweiten Erfassungsbereiches (232) und einen Mittelpunkt des zweiten Abbildungsmittels (214) verläuft.

6. Kombination gemäß einem der vorhergehenden Ansprüche, wobei das erste Sensormittel (211) und das erste Abbildungsmittel (213) derart angeordnet sind, dass der zweite Erfassungsbereich (232) durch das erste Abbildungsmittel (213) abgebildet und von dem ersten Sensormittel (211) erfasst wird.

7. Kombination gemäß einem der vorhergehenden Ansprüche, wobei das erste Sensormittel (211) in einer Ebene parallel zu der Bildebene (E) angeordnet ist, und wobei das zweite Sensormittel (212) in einer Ebene parallel zu der Bildebene (E) angeordnet ist.

8. Kombination gemäß einem der vorhergehenden Ansprüche, wobei das erste Abbildungsmittel (213) und das zweite Abbildungsmittel (214) unterschiedliche Brennweiten aufweisen.

9. Kombination gemäß einem der vorhergehenden Ansprüche, wobei das erste Abbildungsmittel (213) eine kürzere Brennweite aufweist als das zweite Abbildungsmittel (214).

10. Kombination gemäß einem der vorhergehenden Ansprüche, wobei die Vorrichtung 10 (210) derart ausgestaltet ist, dass das zweite Sensormittel (212) im Vergleich zu dem ersten Sensormittel (211) ein vergrößertes Bild erfasst.

11. Kombination gemäß einem der vorhergehenden Ansprüche, wobei sich das Bild auf einer Materialbahn befindet.

12. Kombination gemäß einem der vorhergehenden Ansprüche, wobei das erste und/oder das zweite Abbildungsmittel (213, 214) eine Linse umfasst.

13. Kombination gemäß einem der vorhergehenden Ansprüche, wobei das erste und/oder das zweite Abbildungsmittel (213, 214) ein feststehendes Objektiv ist.

14. Kombination gemäß einem der vorhergehenden Ansprüche, wobei das erste und/oder das zweite Sensormittel (211, 212) ein CMOS-Chip ist.

## Claims

1. A combination of an apparatus (210) to detect an image in an image plane (E) and of a material web being a printed paper web, a foil web or a fabric web, wherein the image plane (E) is located on the material web, wherein the apparatus (210) comprises:
a first sensor means (211) and a first imaging means (213); and
at least a second sensor means (212) and at least a second imaging means (214);
wherein the apparatus is adapted to detect a first detection area (231) and at least a second detection area (232) in the image plane (E),
wherein the first sensor means (211) and the first imaging means (213) are disposed such that the first detection area (231) is depicted by the first imaging means (213) and captured by the first sensor means (211),
wherein the second sensor means (212) and the second imaging means (214) are disposed such that the second detection area (232) is depicted by the second imaging means (214) and captured by the second sensor means (212),
wherein the sensor means (211, 212) and the imaging means (213, 214) are disposed such that the second detection area (232) is smaller than the first detection area (231),
wherein the sensor means (211, 212) and the imaging means (213, 214) are disposed such that the second detection area (232) comprises a portion of the first detection area (231),
wherein the first imaging means (211) comprises a first optical axis (215) and the second imaging means (212) comprises a second optical axis (216), wherein the first optical axis (215) and the second optical axis (216) extend parallel to one another, and
wherein the first sensor means (211) is disposed such that a centre (M1) of the first sensor means (211) has an offset (219) to the first optical axis (215), and/or the second sensor means (212) is disposed such that a centre (M2) of the second sensor means (212) has an offset to the second optical axis (216).

2. The combination according to claim 1, wherein the sensor means (211, 212) and the imaging means (213, 214) are disposed such that the second detection area (232) is disposed within the first detection area (231).

3. The combination according to claim 1 or 2, wherein the first sensor means (211) is disposed such that a centre (M1) of the first sensor means (211) is located on a line extending through a centre of the first detection area (231) and a centre of the first imaging means (213).

4. The combination according to any of the preceding claims, wherein the second sensor means (212) is centered relatively to the second optical axis (216).

5. The combination according to any of the preceding claims, wherein the second sensor means (212) is disposed such that a centre (M2) of the second sensor means (212) is located on a line extending through a centre of the second detection area (232) and a centre of the second imaging means (214).

6. The combination according to any of the preceding claims, wherein the first sensor means (211) and the first imaging means (213) are disposed such that the second detecting area (232) is depicted by the first imaging means (213) and captured by the first sensor means (211).

7. The combination according to any of the preceding claims, wherein the first sensor means (211) is disposed in a plane parallel to the image plane (E), and wherein the second sensor means (212) is disposed in a plane parallel to the image plane (E).

8. The combination according to any of the preceding claims, wherein the first imaging means (213) and the second imaging means (214) have different focal lengths.

9. The combination according to any of the preceding claims, wherein the first imaging means (213) has a shorter focal length than the second imaging means (214).

10. The combination according to any of the preceding claims, wherein the apparatus (210) is configured such that the second sensor means (212) captures an enlarged image as compared to the first sensor means (211).

11. The combination according to any of the preceding claims, wherein the image is situated on the material web.

12. The combination according to any of the preceding claims, wherein the first and/or the second imaging means (213, 214) comprises a lens.

13. The combination according to any of the preceding claims, wherein the first and/or the second imaging means (213, 214) is a fixed objective.

14. The combination according to any of the preceding claims, wherein the first and/or the second sensor means (211, 212) is a CMOS-Chip.

## Revendications

1. Une combinaison d'un dispositif (210) pour détecter une image dans un plan d'image (E) et d'une bande de matière, étant une bande de papier, une bande de film ou une bande de textile, dans lequel le plan d'image (E) se situe sur la bande de matière, le dispositif (210) comprenant:
un premier moyen de détection (211) et un premier moyen d'imagerie (213) ; et
au moins un deuxième moyen de détection (212) et au moins un deuxième moyen d'imagerie (214) ;
dans lequel de dispositif est adapté pour détecter une première zone de détection (231) et au moins une deuxième zone de détection (232) dans le plan d'image (E),
dans lequel le premier moyen de détection (211) et le premier moyen d'imagerie (213) sont disposés de sorte que la première zone de détection (231) est représentée par le premier moyen d'imagerie (213) et saisie par le premier moyen de détection (211),
dans lequel le deuxième moyen de détection (212) et le deuxième moyen d'imagerie (214) sont disposés de sorte que la deuxième zone de détection (232) est représentée par le deuxième moyen d'imagerie (214) et saisie par le deuxième moyen de détection (212),
dans lequel les moyens de détection (211, 212) et les moyens d'imagerie (213, 214) sont disposés de sorte que la deuxième zone de détection (232) est plus petite que la première zone de détection (231),
dans lequel les moyens de détection (211, 212) et les moyens d'imagerie (213, 214) sont disposés de sorte que la deuxième zone de détection (232) comprend une portion de la première zone de détection (231),
dans lequel le premier moyen d'imagerie (211) comprend un premier axe optique (215) et le deuxième moyen d'imagerie (212) comprend un deuxième axe optique (216), le premier axe optique (215) et le deuxième axe optique (216) s'étendant parallèlement l'un par rapport à l'autre, et
dans lequel le premier moyen de détection (211) est disposé de sorte qu'un centre (M1) du premier moyen de détection (211) présente un décalage (219) par rapport au premier axe optique (215), et/ou le deuxième moyen de détection (212) est disposé de sorte qu'un centre (M2) du deuxième moyen de détection (212) présente un décalage par rapport au deuxième axe optique (216).

2. La combinaison selon la revendication 1, dans laquelle les moyens de détection (211, 212) et les moyens d'imagerie (213, 214) sont disposés de sorte que la deuxième zone de détection (232) est disposée à l'intérieur de la première zone de détection (231).

3. La combinaison selon la revendication 1 ou 2, dans laquelle le premier moyen de détection (211) est disposé de sorte qu'un centre (M1) du premier moyen de détection (211) se situe sur une ligne passant par un centre de la première zone de détection (231) et un centre du premier moyen d'imagerie (213).

4. La combinaison selon l'une des revendications précédentes, dans laquelle le deuxième moyen de détection (212) est disposé de manière centrée par rapport au deuxième axe optique (216).

5. La combinaison selon l'une des revendications précédentes, dans laquelle le deuxième moyen de détection (212) est disposé de sorte qu'un centre (M2) du deuxième moyen de détection (212) se situe sur une ligne passant par un centre de la deuxième zone de détection (232) et un centre du deuxième moyen d'imagerie (214).

6. La combinaison selon l'une des revendications précédentes, dans laquelle le premier moyen de détection (211) et le premier moyen d'imagerie (213) sont disposés de sorte que la deuxième zone de détection (232) est représentée par le premier moyen d'imagerie (213) et saisie par le premier moyen de détection (212).

7. La combinaison selon l'une des revendications précédentes, dans laquelle le premier moyen de détection (211) est disposé dans un plan parallèle au plan d'image (E), et dans laquelle le deuxième moyen de détection (212) est disposé dans un plan parallèle au plan d'image (E).

8. La combinaison selon l'une des revendications précédentes, dans laquelle le premier moyen d'imagerie (213) et le deuxième moyen d'imagerie (214) présentent des distances focales différentes.

9. La combinaison selon l'une des revendications précédentes, dans laquelle le premier moyen d'imagerie (213) présente une distance focale plus courte que le deuxième moyen d'imagerie (214).

10. La combinaison selon l'une des revendications précédentes, dans laquelle le dispositif (210) est configuré de sorte que le deuxième moyen de détection (212) saisit une image agrandie en comparaison au premier moyen de détection (211).

11. La combinaison selon l'une des revendications précédentes, dans laquelle l'image se situe sur une bande de matériel.

12. La combinaison selon l'une des revendications précédentes, dans laquelle le premier et/ou le deuxième moyen d'imagerie (213, 214) comprend une lentille.

13. La combinaison selon l'une des revendications précédentes, dans laquelle le premier et/ou le deuxième moyen d'imagerie (213, 214) est un objectif fixe.

14. La combinaison selon l'une des revendications précédentes, dans laquelle le premier et/ou le deuxième moyen de détection (211, 212) est une puce CMOS.
